# EUROPÄISCHE PATENTSCHRIFT

(11) **EP 2 725 048 B1**
(45) Veröffentlichungstag und Bekanntmachung des Hinweises auf die Patenterteilung: **20.07.2016**
(21) Anmeldenummer: 12190403.1
(22) Anmeldetag: 29.10.2012
(51) Int. Cl.: C08G 63/16, C08G 63/78, C08G 63/85

(54) **Verfahren zur Herstellung eines hochmolekularen Polyesters oder Copolyesters sowie diese enthaltende Polymerblends**
Method for producing a high molecular weight polyester or copolyester and polymer blends containing the same
Procédé de fabrication d'un polyester ou d'un copolyester à haut poids moléculaire ainsi que mélanges de polymères en contenant

(43) Veröffentlichungstag der Anmeldung: 30.04.2014
(73) Patentinhaber: Uhde Inventa-Fischer GmbH, 13509 Berlin (DE)
(72) Erfinder: Hess, Christopher, Dr., 16567 Schönfließ (DE); Hagen, Rainer, Dr., 13465 Berlin (DE)
(74) Vertreter: Pfenning, Meinig & Partner mbB

(56) Entgegenhaltungen:
- WO-A1-2011/045293
- WO-A2-2009/118600
- DE-A1- 4 440 850
- US-A1- 2006 142 536
- US-A1- 2010 152 408
- US-A1- 2011 039 999

## Beschreibung

Die Erfindung betrifft ein Verfahren zur Herstellung eines hochmolekularen Polyesters bzw. Copolyesters, das mindestens drei Verfahrensschritten umfasst. In einem ersten Verfahrensschritt wird aus mindestens einer aromatischen Dicarbonsäure oder deren Diester oder deren Säureanhydrid sowie mindestens einer aliphatischen Diacarbonsäure oder deren Diester oder deren Säureanhydrid sowie mindestens einem Dialkohol sowie der benötigte Menge an Umsterungs- bzw. Polykondensationskatalysator eine Paste hergestellt. Diese Paste wird in einem zweiten Schritt unter erhöhter Temperatur zu einem Prepolymer umgesetzt und in der dritten Verfahrensstufe wird dieses erhaltene Prepolymer unter gegenüber Normalbedingungen vermindertem Druck polykondensiert oder copolykondensiert. Die Ausführung des Verfahrens kann kontinuierlich sowie auch diskontinuierlich erfolgen. Weiterhin betrifft die Erfindung die Verwendung der mit dem erfindungsgemäßen Verfahren hergestellten Polyester und Copolyester zur Herstellung von kompostierbaren Formkörpern, biologisch abbaubaren Schäumen und Papierbeschichtungsmitteln.

Im Stand der Technik sind seit vielen Jahrzehnten unterschiedliche Polymere für verschiedene Anwendungen bekannt. Beispielhaft sind hier Polyolefine, Polyester, Polyamide, Polyacrylate oder auch Polycarbonate zu nennen. Die Auswahl dieser unterschiedlichen Polymermaterialien richtet sich im Allgemeinen nach dem Einsatzzweck und den angestrebten mechanischen Eigenschaften, wie z.B. Festigkeit, Schlagzähigkeit, chemische- oder Temperaturbeständigkeit. Häufig werden aromatische Polyester eingesetzt, die durch Veresterung und Polykondensation von Terephthalsäure mit Ethylenglykol oder Butylenglykol erhalten werden. Obwohl die daraus erhaltenen Polymere Polyethylenterephthalat (PET) oder Polybutylenterephthalat (PBT) über hervorragende Eigenschaften verfügen, sind sie aber nicht biologisch abbaubar. Dies ist für manche Anwendungen von Nachteil, insbesondere dort, wo aus diesen Polymeren hergestellte Artikel keinem Recycling oder fachgerechten Entsorgung zurückgeführt werden und dann zu einer Umweltverschmutzung führen. Zusätzlich ist eine biologische Abbaubarkeit von Polymeren insbesondere dann von großem Vorteil, wenn die Polymere z.B. in Form von Folien, Fasern, Vliesen, Schäumen oder Formkörpern in der Landwirtschaft, Kompostbereitung oder in maritimen Anwendungen nicht aufwändig nach der Nutzung abgetrennt und/oder gesammelt werden müssen, sondern in der Umgebung verbleiben können und dort abgebaut werden.

Für diese Zwecke genutzte biologisch abbaubare Polymere sind häufig ausschließlich aus aliphatischen Komponenten aufgebaute Polyester wie z.B. Polycaprolacton oder Polybutylenadipat. Aufgrund ihrer häufig unzureichenden mechanischen Eigenschaften sowie insbesondere ihrer geringen Temperaturbeständigkeit können sie jedoch nur in sehr wenigen Anwendungen eingesetzt werden, wie z.B. als Folien in der Landwirtschaft oder für medizinische Zwecke.

Um die mechanischen Eigenschaften der bioabbaubaren Polyester zu verbessern, wurde ein Teil der aliphatischen Komponenten durch aromatische Verbindungen, wie insbesondere der Terephthalsäure, ersetzt. Dies ist jedoch nur in gewissen Grenzen möglich, da sich mit zunehmendem Anteil der aromatischen Komponente die Bioabbaubarkeit verringert. Solche Biopolymere auf der Basis von Copolyestern von aromatischen und aliphatischen Dicarbonsäuren wurden seit den 1990er Jahren entwickelt wie z.B. das Polytetramethylenadipat-Terephthalat (PBAT bzw. alternativ auch als PTMAT bezeichnet) oder das Polytetramethylensuccinat-Terephthalat (PBST).

Problematisch bei den seit vielen Jahrzehnten bekannten Polymermaterialien ist allerdings, dass die Edukte zur Herstellung derartiger Polymere, wie z.B. die aromatischen Bausteine Terephthalsäure bzw. die Isophthalsäure oder die aliphatischen Dicarbonsäuren Adipinsäure bzw. die Bernsteinsäure sowie die aliphatischen Alkohole Butandiol bzw. Ethylenglykol aus fossilen Quellen stammen. Am Markt besteht deshalb eine große Nachfrage nach Polymermaterialien, insbesondere auch nach biologisch abbaubaren Polyestern, bei denen Edukte zur Herstellung der Polyester eingesetzt werden, die im Wesentlichen aus nachwachsenden Rohstoffen gewonnen werden. Daher hat es bereits in der Vergangenheit nicht an Versuchen gefehlt, derartige Polymere und insbesondere Polyester herzustellen, die über eine biologische Abbaubarkeit verfügen und idealerweise aus nachwachsenden Rohstoffen zu bestehen. Als Beispiele sind hierbei Polylactid (PLA) wie auch das Polybutylensuccinat (PBS) zu nennen, da für die hierfür benötigten Monomerbausteine Milchsäure, Bernsteinsäure bzw. Butandiol technische Möglichkeiten gefunden wurden, diese aus nachwachsenden Rohstoffen zu erhalten. Auch zeichnen sich technologische Möglichkeiten ab Terephthalsäure aus nachwachsenden Rohstoffen zugänglich zu machen, bzw. bislang genutzte aromatische Dicarbonsäure durch heteroaromatische Dicarbonsäuren zu ersetzten. Solche heteroaromatischen Dicarbonsäuren wie z.B. die 2,5-Furandicarbonsäure sind gut aus nachwachsenden Rohstoffen zugänglich und ergeben bei der Substitution der bislang verwendeten aromatischen Komponente Terephthalsäure Polymere mit einem hierzu sehr ähnlichen Eigenschaftsniveau.

Für die technische Herstellung der konventionellen Polyester wie auch der biologisch abbaubaren Polyester werden Katalysatoren bzw. Kombinationen von Katalysatoren mit Stabilisatoren und Deaktivatoren benötigt. Verschiedene metallhaltige Katalysatoren werden gemäß des Standes der Technik für die Herstellung von terephthalsäurehaltigen Polyestern wie dem PET oder PBT oder aliphatischer Polyester genutzt wie z.B. Verbindungen des Antimons, Zinn oder des Titans. MacDonald (Polym Int 51:923-930 (2002)) beschreibt in seiner Veröffentlichung die Verwendung von Titan-basierenden Katalysatoren für die Herstellung des rein auf Terephthalsäure basierenden Polyesters Polyethylenterephthalat. Insbesondere zeichnen sie sich die Titan basierenden Katalysatoren dadurch aus, dass sie eine erhöhte Aktivität gegenüber den von der Industrie bevorzugten Antimonkatalysatoren aufweisen. Allerdings zeigen die Titan-Katalysatoren der ersten Generation, wie insbesondere Titanalkoxide wie das Tetra-n-butylorthotitatanat oder einfach aufgebaute Chelatkomplexe zwar die gewünschten erhöhten Reaktionsraten, jedoch sind sie anfällig für Hydrolysereaktionen bei denen Oxoalkoxide gebildet werden, die dann aber nur eine geringe katalytische Aktivität aufweisen.

Für die Herstellung von aliphatischen Polyestern, wie z.B. dem PBS werden insbesondere Titanalkoxide verwendet, die häufig jedoch zu geringen Molmassen der Polymere führen, die für technische Anwendungen nicht ausreichend sind. Die hierfür benötigten Molmassen werden erst durch einen Kettenverlängerungsschritt z.B. unter Verwendung von reaktivem und toxischem Hexamethylendiisocyanat erreicht.

WO 96/015173 beschreibt biologisch abbaubaren Polyesters basierend auf aliphatischen und aromatischen Diacarbonsäuren sowie aliphatischen Dihydroxyverbindungen. Die Herstellung dieser Polyester wird als grundsätzlich bekannt angegeben, wobei Umesterungs-, Veresterungs- und Polykondensationsreaktionen nach dem Stand der Technik eingesetzt werden können. Im Verlauf der Herstellung können weitere Comonomere sowie Kettenverzweiger und/oder Kettenverlängerer basierend auf Diisocyanaten zugegeben werden. Die Herstellung erfolgt unter Zugabe von Katalysatoren, wie die metallorganischen Metallverbindungen des Ti, Ge, Zn, Fe, Mn, Co, Zr, V, Ir, LA, Ce, Li und Ca. Es werden keine bevorzugten Zugabeorte oder benötigte Mengen der Katalysatoren aufgeführt.

Aus der US 6,399,716 B2 ist ein Verfahren zur Herstellung eines teilaromatischen Copolyesters bekannt, bei dem in einem ersten Schritt ein aliphatisches Prepolymer hergestellt und in einem zweiten Schritt mit einer aromatischen Dicarbonsäure und einem aliphatischen Glykol umgesetzt wird. In einem dritten Schritt wird abermals eine Menge an aliphatischer Dicarbonsäure zugegeben und mit der Reaktionsmasse umgesetzt. Abschließend erfolgt als vierter Schritt eine zweistufige Polykondensation des in den vorausgegangenen Stufen hergestellten Reaktionsproduktes. Die Zugabe der Katalysatoren kann dabei zu Beginn oder zu Ende der des ersten, zweiten oder dritten sowie zu Beginn des vierten Reaktionsschrittes erfolgen. Die Menge an eingesetztem Katalysator kann zwischen 0,02 bis 2,0 Gew.% betragen. Die Katalysatoren sind aus der Gruppe der Verbindungen des Ti, Ge, Zn, Fe, Mn, Co und Zr gewählt, bevorzugt organometallische Verbindungen der Titanate, Antimonate oder Zinnoxide. Besonders bevorzugte Titanverbindungen sind das Tetrabutyltitanat sowie das Tetrapropyltitanat. Die beschrieben Ausführungen verlangen stets nach einer separate Zugabe und Umsetzung der die Molekülketten aufbauenden Monomereinheiten - nur so könne ein ausreichend hohes Molekulargewicht erreicht werden. Ein gemeinsames Vorlegen aller Monomereinheiten wird daher vermieden. Bei den verwendeten titanhaltigen Katalysatoren sind die Alkoxide bevorzugt, es werden keine speziellen hydrolysestabilen Ti-Verbindungen als Katalysatoren eingesetzt.

In US 2006/0155099 A1 wird ein Verfahren zur Herstellung eine bioabbaubaren Copolyesters offenbart, bei dem zunächst eine aromatische dicarboxylische Verbindung mit einem ersten aliphatischen Glykol zur Reaktion gebracht wird (a), das hierbei entstandene aromatische Prepolymer mit einer zweiten aromatischen dicarboxylischen Verbindung und einem zweiten aliphatischen Glykol umgesetzt wird (b), um ein erstes Reaktionsprodukt zu erhalten; im Anschluss wird in einem weiteren Schritt dieses erste Reaktionsprodukt mit einer aliphatischen dicarboxylischen Komponente umgesetzt (c), um ein zweites Reaktionsprodukt zu erhalten. Abschließend erfolgt eine Polykondensation dieses zweiten Reaktionsproduktes (d). Es wird beschrieben, dass die Zugabe von Katalysatoren zur Reaktionsbeschleunigung förderlich sein kann. Die Zugabe der Katalysatoren erfolgt dabei in die Stufen (b) und/oder (d). Bei den verwendeten Katalysatoren handelt es sich um metallhaltige Verbindungen aus der Gruppe der ti, Sb, Mn, Al, Zn, vorzugsweise Tihaltige Verbindungen und insbesondere Tetrabutylorthotitanat in einer Menge von 1500 bis 3000 ppm. Die beschrieben Ausführungen fordern stets eine separate Zugabe und Umsetzung der die Molekülketten aufbauenden Monomereinheiten. Bei den verwendeten titanhaltigen Katalysatoren sind die Alkoxide bevorzugt, es werden keine speziellen hydrolysestabilen Ti-Verbindungen als Katalysatoren eingesetzt.

In US 2011/0039999 und 2011/0034662 wird ein kontinuierliches Verfahren zur Herstellung biologisch abbaubarer Polyester auf der Basis von aliphatischen und aromatisches Dicarbonsäuren sowie aliphatischen Dihydroxyverbindungen beschrieben. Es wird speziell ausgeführt, dass die Rohstoffe zu einer Paste angesetzt werden allerdings ohne Zugabe eines Katalysators d.h. die besondere Vorgehensweise besteht in einem bewussten Vermeidens der Zugabe des Katalysators bereits zu diesem frühen Zeitpunkt im Verfahren. Bevorzugt wird stattdessen die Hauptmenge des Katalysators während der Veresterung zuzugeben, während eine restliche Teilmenge erst zu einem späteren Zeitpunkt zugegeben wird. Als Katalysatoren werden allgemein Metallverbindungen der Elemente Ti, Ge, Zn, Fe, Mn, Co, Zr, V, Ir, La, Ce, U und Ca insbesondere metallorganische Verbindungen sowie insbesondere bevorzugt Alkoxide von Zink, Zinn und Titan aufgeführt, ohne die spezifische Eigenschaften der Katalysatoren oder die Vorteilhaftigkeit bei ihrer Verwendung auszuführen. Das Gewichtsverhältnis von Katalysator zur Menge an erzeugtem biologisch abbaubaren Polyester liegt dabei zwischen 0,01:100 und 3:100 wobei für die reaktiven Titanverbindungen auch geringere Verhältnisse möglich seien. Die Zugabe des Katalysators erfolgt als Gesamtmenge oder aufgeteilt in Teilmengen ab dem Zeitpunkt zu Beginn der Reaktion also frühestens mit dem Einsetzten der Umesterungs- oder Veresterungsreaktion, sowie während der gesamten Phase der Polykondensation. Keinesfalls jedoch darf die Zugabe des Katalysators schon bereits während der Herstellung Paste aus den Edukten erfolgen. Es ist zu vermuten, dass dies aus Gründen des Vermeidens der Hydrolyse der insbesondere bevorzugten Alkoxide und somit Verminderung ihrer Reaktivität geschieht. Die Zugabe zu späteren Zeitpunkten-insbesondere in Anlagenteile die unter erhöhter Temperatur und/oder von atmosphärischem Druck abweichenden Bedingungen betrieben werden ist häufig kritisch da hierfür speziell geeignete, zusätzliche Dosiervorrichtungen wie z.B. Kolben- oder Zahnradpumpendosiersysteme benötigt werden, die jedoch ein hohes Maß an Überwachung benötigen und zudem verschleißanfällig sind. Auch neigen die Enden der Katalysatordosierleitungen, die direkt mit Polymer- oder Brüden-führenden Apparateteilen verbunden sind zum Verstopfen durch Polymer- oder Oligomerablagerungen, sodass die Katalysatordosierungen nur noch vermindert stattfindet oder ganz zum Erliegen komm, was jeweils zu Prozessstörungen führt.

Aufgabe der vorliegenden Erfindung ist es deshalb, ein verbessertes Verfahren zur Herstellung von hochmolekularen Co-Polyestern, insbesondere von Polyestern auf Basis von aromatischen Dicarbonsäure, aliphatischen Dicarbonsäuren und aliphatischen Dialkoholen vorzuschlagen, deren Herstellung gegenüber dem Stand der Technik vereinfacht gelingt und deren mechanischen und physikalischen Eigenschaften gegenüber dem Stand der Technik verbessert sind.

Dies Aufgabe wird erfindungsgemäß durch das Verfahren mit den Merkmalen des Anspruchs 1 gelöst. Die weiteren abhängigen Ansprüche zeigen vorteilhafte Weiterbildungen auf. Erfindungsgemäße Verwendungen sind in Anspruch 13 angegeben.

Erfindungsgemäß wird ein Verfahren zur Herstellung hochmolekularer Polyester oder Copolyester bereitgestellt, bei dem
a) in einem ersten Schritt die Gesamtmenge der zu Kondensationsreaktionen befähigten Monomere oder Oligomere enthaltend mindestens eine aromatische oder heteroaromatische C₄-C₁₂-Dicarbonsäure oder deren Diestern, mindestens eine aliphatische C₂-C₁₂-Dicarbonsäure oder deren Diester, mindestens ein C₂-C₁₂-Alkanol mit mindestens zwei Hydroxylgruppen durch Mischen zu einer Paste verarbeitet werden, wobei während der Herstellung der Paste oder in die fertig hergestellte Paste mindestens ein Katalysator ausgewählt aus der Gruppe bestehend aus von Ethanolaminen abgeleiteten Chelaten der Titansalze oder der Zirkonsalze einzeln und/oder deren Mischungen oder Lösungen zugegeben wird, wobei die Gesamtmenge oder eine Hauptmenge von mindestens 50 Gew.-%, bezogen auf die Gesamtmenge des Katalysators, zugesetzt wird,
b) in einem zweiten Schritt die Paste durch Erhöhen der Temperatur und unter Abdestillieren von Kondensationsprodukten oder Umesterungsprodukten zu einem Veresterungs- oder Umesterungsprodukt umgesetzt wird und
c) das aus Schritt b) erhaltene Veresterungs- oder Umesterungsprodukt unter gegenüber Normalbedingungen vermindertem Druck bis zu einem Molekulargewicht M_{w} von mindestens 100.000 g/mol und einer relativen Viskosität von 1,5 bis 2,0 polykondensiert oder copolykondensiert wird.

Dies gelingt durch die Herstellung einer Paste, die bereits alle durch Kondensationsreaktionen zum Kettenaufbau beitragenden Monomereinheiten sowie die Gesamtmenge bzw. Hauptmenge (d.h. mindestens 50 Gew.-%) an Katalysator enthält.

Wesentliches Element der vorliegenden Erfindung sind somit die spezielle Verfahrensführung bezüglich der Herstellung der Paste und die Verwendung speziell geeigneter hydrolysestabiler Katalysatoren.

Bisher hat der Fachmann es vermieden, den Katalysator direkt in die Paste zuzugeben. Ein Grund ist, dass mit den üblichen Ti- oder Zr-alkoxiden bereits bei den niedrigen Temperaturen der Pastenherstellung die Bildung von Nebenprodukten aus den Diolkomponenten einsetzt, wie Tetrahydrofuran aus Butandiol oder Acetaldehyd aus Ethylenglykol. Diese Nebenprodukte sind leicht entzündlich, geruchsintensiv, gesundheitsschädlich und gehen in den Spülstickstoff über, mit dem die Paste im Misch- und Vorratsbehälter üblicherweise abgedeckt wird, der damit nicht ohne weitere Behandlung an die Umgebung abgegeben werden kann.

Ein anderer Grund ist die Hydrolyseempfindlichkeit insbesondere der Ti- und Zr-alkoxide. Die hygroskopischen Eigenschaften vieler Diole, wie Ethylenglykol oder Butandiol führen dazu, dass sie selbst im Anlieferungszustand nicht völlig wasserfrei sind und bei der Pastenherstellung durch den Kontakt mit der Umgebungsluft noch mehr Wasser aufnehmen. Diese Aufnahme kann nur durch aufwendige Gegenmaßnahmen vermieden werden wie Stickstoffbeschleierung bei Entleerung, Lagerung und Dosierung sowohl der Dicarbonsäure- als auch der Diolkomponenten des Polyesters. Auch eine geringe Wasserkonzentration in der Paste führt wegen der üblicherweise großen Verweilzeit im Misch- und Vorratsbehälter der Paste zu teilweiser Hydrolyse der Ti- und Zralkoxide, die die katalytische Aktivität herabsetzt und zu unerwünschter Trübung des Polyesters durch die entstandenen Hydroxide oder Oxide dieser Metalle führt.

Mit der Wahl gleichzeitig hydrolysestabiler und katalytisch aktiver Ti- und Zr-Verbindungen kann nun erfindungsgemäß der Katalysator der Paste überaschenderweise direkt zugeführt werden, ohne einen großen Aufwand bei der Inertisierung von Entleerung, Lagerung und Dosierung der Rohstoffkomponenten des Polyesters treiben zu müssen.

Gegenüber der Zugabe in den Veresterungsreaktor hat die Zugabe in die Paste dabei wesentliche Vorteile: Der Katalysator verteilt sich in der Paste gleichmäßig, bevor diese im Reaktor auf Reaktionstemperatur erhitzt wird. Demgegenüber führt die Dosierung des Katalysators direkt in den Reaktor in der Umgebung der Eintrittsstelle in der reagierenden Schmelze lokal zu einer hohen Konzentration. Diese fördert unerwünschte Nebenreaktionen, z. B. Hydrolyse des Katalysators durch Einwirkung des chemisch durch die Veresterungsreaktion gebildeten Wassers bei hoher Temperatur, welche die katalytische Aktivität herabsetzt, die Verfärbung des Polyesters, die die Produktqualität mindert oder die Bildung unerwünschter Nebenprodukte in erhöhter Menge, wie Tetrahydrofuran aus Butandiol oder Acetaldehyd aus Ethylenglykol, welche die Ausbeute der Polymerisation reduzieren und den Rohstoffbedarf erhöhen.

Daneben ist die Dosierung in den drucklosen Pastenmischer genauer und zuverlässiger als in einen unter Vakuum oder Druck bei hoher Temperatur stehenden Reaktor.

Der Polyester, der nach dem erfindungsgemäßen Verfahren erhalten wird, liegt nach Abkühlen bevorzugt in Granulatform vor und kann dann somit problemlos durch an und für sich im Stand der Technik bekannte Formwerkzeuge z.B. über einen Extruder mittels Extrusion oder Spritzguss zu geformten Artikeln verarbeitet werden.

Die Bestimmung der Lösungsviskosität erfolgt entsprechend ISO 1628-5 an einer Lösung des Polyesters in einer Konzentration von 0,5 g/dL in einem geeigneten Lösungsmittel wie z.B. m-Kresol oder Hexafluorisopropanol oder in einem Lösungsmittelgemisch wie z.B. Phenol/Dichlorbenzol. Bevorzugt wird ein 1:1 massenanteiliges Lösungsmittelgemisch aus Phenol und Dichlorbenzol eingesetzt, es erfolgt daran die Ermittlung der Durchflusszeiten von Lösung und Lösungsmittel in geeigneten Kapillaren des Typs Ubbelohde bei 25,0°C. Aus dem Quotienten der Durchflusszeiten der Lösung sowie des Lösungsmittels wird anschließend die relative Viskosität R.V. ermittelt.

Das durchschnittliche Molekulargewicht für das Gewichtsmittel Mw beträgt mindestens 100.000 Da, bestimmt nach der Methode der Gelpermeationschromatographie (GPC) mit angeschlossenem Brechungsindexdetektor anhand einer Lösung der Polyester im Lösungsmittel Chloroform ( 2 mg/mL), kalibriert gegen Polystyrol Standards mit einer engen Molmassenverteilung.

Das erfindungsgemäße Verfahren wird nachstehend in Bezug auf die einzelnen Verfahrensschritte näher erläutert.

Erfindungsgemäß ist vorgesehen, dass zur Herstellung des hochmolekularen Copolyesters in einem ersten Verfahrensschritt mindestens eine aromatische Dicarbonsäure oder der Diester oder ein Säureanhydrid einer aromatischen Dicarbonsäure mit 4 bis 12 C-Atomen und mindestens eine aliphatische Dicarbonsäure mit 2 bis 14 C-Atomen und mindestens ein Alkohol von 2 bis 12 C-Atomen und mindestens 2 Hydroxyfunktionalitäten, sowie optional weiteren aromatischen, heteroaromatischen und/oder aliphatischen Dicarbonsäuren oder aliphatische Dicarbonsäuren, hiervon abgeleitete Diester oder Säureanhydride und ggf. weiteren Comonomeren durch Mischen zu einer Paste verarbeitet wird und zu der die Gesamtmenge an Katalysator für die Veresterungsbzw. Umesterungsreaktion sowie die anschließende Polykondensation zugegeben wird.

Die erfindungsgemäß eingesetzten aromatischen oder heteroaromatischen Dicarbonsäuren mit 4 bis 12 Kohlenstoffatomen können dabei lineare oder aromatische oder heteroaromatische verzweigte Dicarbonsäuren darstellen. Ebenso können von den aromatischen oder heteroaromatischen Dicarbonsäuren abgeleitete Säureanhydride oder deren Diester eingesetzt werden. Ebenso ist eine Mischung der aus den genannten aromatischen oder heteroaromatischen Dicarbonsäuren und den abgeleiteten Säureanhydriden und oder den Diestern denkbar. Bevorzugt sind aromatischen oder heteroaromatischen Dicarbonsäuren oder deren Diester ausgewählt aus der Gruppe bestehend aus Terephthalsäure, Isophthalsäure, Phthalsäure, 2,5-Furandicarbonsäure, Naphthalindicabonsäure. Besonders bevorzugt sind die Terephthalsäure sowie die 2,5-Furandicabonsäure.

Die erfindungsgemäß eingesetzten aliphatischen Dicarbonsäuren mit 2 bis 12 Kohlenstoffatomen können dabei linear oder verzweigt aliphatische Dicarbonsäuren darstellen. Ebenso können von den aliphatischen Dicarbonsäuren abgeleitete Säureanhydride oder Diester eingesetzt werden. Die Säureanhydride können dabei beispielsweise zyklische oder gemischte Säureanhydride darstellen. Ebenso ist eine Mischung aus den genannten aliphatischen Dicarbonsäuren und den abgeleiteten Säureanhydriden und oder den Diestern denkbar. Zudem ist es möglich, dass die aliphatischen Dicarbonsäuren bzw. deren abgeleiteten Säureanhydride oder Diester als Reinsubstanz eingesetzt werden, auch möglich ist, dass mehr als eine aliphatische Dicarbonsäure, beispielsweise als Gemisch mehrerer Dicarbonsäuren oder deren Anhydride oder Diester verwendet wird. Bevorzugt sind aliphatische Dicarbonsäuren ausgewählt aus der Gruppe bestehend aus Malonsäure, Oxalsäure, Bernsteinsäure, Glutarsäure, 2-Methylglutarsäure, 3-Methylglutarsäure, Adipinsäure, Pimelinsäure, Korksäure, Acelainsäure, Sebacinsäure, Undecandisäure, Dodecandisäure, Brassylsäure, Tetradecandisäure, 3,3-Dimethylpentandisäure, Fumarsäure, 2,2-Dimethylglutarsäure, Suberinsäure, Dimerfettsäure, 1,3-Cyclopentandi-carbonsäure, 1,4-Cyclohexandicarbonsäure, 1,3-Cyclohexandicarbon-säure, Diglykolsäure, Itaconsäure, Maleinsäure, Maleinsäureanhydrid, 2,5-Norbornandicarbonsäure oder deren Ester, Anhydride oder Mischungen hiervon, besonders bevorzugt sind die Adipinsäure sowie die Bernsteinsäure sowie deren Diester.

Das erfindungsgemäß eingesetzte Alkanol mit 2-12 Kohlenstoffatomen kann dabei ebenso einen linearen oder verzweigten aliphatischen Grundkörper aufweisen. Bevorzugt ist der das Alkanol ein Glykol, d.h. weist zwei Hydroxyfunktionalitäten auf. Die Hydroxyfunktionalitäten sind dabei bevorzugt primäre oder sekundäre, insbesondere primäre Hydroxyfunktionalitäten. Vorteilhaft ist es, wenn der mindestens eine Alkohol ausgewählt ist aus der Gruppe bestehend aus Ethylenglykol, 1,2-Propandiol, 1,3-Propandiol, 1,2-Butandiol, 1,4-Butandiol, 1,5-Pentandiol, 1,6-Hexandiol, 2,4-Dimethyl-2-ethylhexan-1,3-diol, 2,2-Dimethyl-1,3-propandiol, 2-Ethyl-2-butyl-1,3-propandiol, 2-Ethyl-2-isobutyl-1,3-propandiol, 2,2,4-Trimethyl-1,6-hexan-diol, Cyclopentandiol, 1,4-Cyclohexandiol,1,2-Cyclohexandimethanol, 1,3-Cyclohexandimethanol, 1,4-Cyclohexandimethanol oder 2,2,4,4-Tetra-methyl-1,3-cyclobutandiol oder Mischungen hiervon,. Besonders bevorzugt ist das 1,4-Butandiol sowie das 1,3-Propandiol.

Vorzugsweise können in Schritt a) weitere Comonomere eingesetzt werden. Als Comonomere eignen sich Hydroxycarbonsäuren, oligomere Verbindungen wie Polyetheralkohole, Diamine, Aminoalkohole, Sulfodicarbonsäuren ohne die Art der in die Polymerkette einkondensierbaren Verbindungen durch die aufgeführte Auswahl einzuschränken. Besonders bevorzugt sind hier Comonomere ausgewählt aus der Gruppe bestehend aus Milchsäure, Milchsäureoligomere, Hydroxybuttersäure, Hydroxybuttersäure-oligomere, Polyethylenglykol, Polypropylenglykol, Glycerin, Trimethylolpropan, Pentaerytrit oder Zitronensäure oder Mischungen hiervon.

Vorzugsweise wird in Schritt a) das stöchiometrische Verhältnis der Gesamtmenge an Carboxyl-Funktionalitäten zur Gesamtmenge der Hydroxyl-Funktionalitäten im Bereich von 1:0,5 bis 1:5,0, bevorzugt von 1:0,9 bis 1:3,0, besonders bevorzugt 1:1,1 bis 1:2,0 liegt.

Weiterhin ist es in Schritt a) bevorzugt, dass die Verarbeitung zur Paste bei Temperaturen im Bereich von + 10°C bis + 120°C erfolgt, wobei bevorzugt die Paste durch technische Maßnahmen wie Rührorgane, Mischdüsen, Zirkulationsleitungen etc. in einem fließ- sowie mittels Pumpen förderfähigen Zustand gehalten wird und ein Aussedimentieren einzelner Komponenten der Paste verhindert wird.

Der Katalysator ist aus der Gruppe bestehend aus von Ethanolaminen abgeleitete Chelate der Titansalze oder der Zirkonsalze einzeln und/oder deren Mischungen oder Lösungen ausgewählt, wobei der Katalysator bevorzugt eine Reinheit von > 99,9 Gew.% Titan oder Zirkon aufweist.

Dabei wird der Katalysator in Schritt a) vorzugsweise in einer Konzentration von 1 bis 20.000 ppm, bevorzugt von 10 bis 10.000 ppm, bezogen auf die Gewichtssumme aus den eingesetzten Monomeren und Oligomeren, eingesetzt.

Als Kettenverzweiger werden Verzweigungskomponenten wie z.B. mehrwertige Carbonsäuren (Propantricabonsäure, Pyromellitsäure, oder Säureanhydride sowie mehrwertige Alkohole. Beispielhaft sind hier folgende Verbindungen zu nennen:
Weinsäure, Zitronensäure, Apfelsäure, Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin.

Insbesondere sollen die Kettenverzweigungen die Verarbeitungseigenschaften z.B. beim Filmblasen verbessern. Um einer Gelbildung vorzubeugen, sollte der Anteil an Verzweigungskomponenten < 1 mol% sein. Die Langkettenverzweigungen sollen bewirken, dass das Polymer eine höhere Stabilität in der Schmelze sowie eine höherer Kristallisationstemperatur hat. Bevorzugt werden Trimethylolpropan und Glycerin eingesetzt.

Als Kettenverlängerer werden vorzugsweise aliphatische, di- oder höherfunktionelle Epoxide, Carbodiimide oder Diisocyanate, Oxazoline oder Dianhydride eingesetzt, bevorzugt in einer Menge von 0,01 bis 4 Gew.% bezogen auf die Masse des Polyesters oder Copolyesters. Dadurch erhält das Polymer seine endgültigen Eigenschaften, insbesondere ausreichend hohe Schmelzviskositäten für die Weiterverarbeitung.

Die Kettenverlängerer können mittels gemäß des Stand der Technik bekannten Dosier- und Mischeinrichtungen in das Polymer vor, während oder nach Stufe c) zugegeben und homogen eingemischt und zur Reaktion gebracht werden. Idealerweise liegen die Kettenverlängerer bei Raumtemperatur oder erhöhter Temperatur in flüssiger Form vor und werden z.B. mittels eines kontinuierlich zu betreibenden Fördersystems mit zwei in Reihe verbundenen Dosierpumpen und einem nachgeschalteten statischen Mischer vergleichbar der Anmeldung WO 2007/054376 A1 eingemischt und zur Reaktion gebracht.

Als Kettenverlängerer kommen difunktionelle oder oligofunktionelle Epoxide in Frage wie: Hydrochinon, Diglycidylether, Resorcindiglycidylether, 1,6-Hexandiol-diglycidylether und hydrierter Bisphenol-A-Diglycidylether. Andere Beispiele von Epoxiden umfassen Diglycidylterephthalat, Phenylendiglycidylether, Ethylendiglycidylether, Trimethylendiglycidylether, Tetramethylendiglycidylether, Hexamethylendiglycidylether, Sorbitoldiglycidylether, Polyglycerin-polyclycidylether, Pentaerythritpolyglycidylether, Diglycerol-polyglycidylether, Glycerol-polyglycidylether, Trimethylolpropan-polyglycidylether, Resorcinol-diglycidylether, Neopentyglycol-diglycidylether, Ethylenglycol-diglycidylether, Diethylenglycoldiglycidylether, Polyethylenglycol-diglycidylether, Propylenglycoldiglycidylether, Dipropylenglycol-diglycidylether, Polypropylenglycoldiglycidylether und Polybutydienglycol-diglycidylether.

Als Kettenverlängerer ist insbesondere geeignet ein Epoxidgruppen-haltiges Copolymer auf Basis Styrol, Acrylsäureester und/oder Methacrylsäureester. Die Expoxidgruppen tragenden Einheiten sind vorzugsweise Glycidyl(meth)acrylate. Als vorteilhaft haben sich Copolymere mit einem Glycidylmetharcrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) M_{w} der Polymere beträgt vorzugsweise 2000 bis 25.000, insbesondere 3000 bis 8000. Das mittlere Molekulargewicht (Zahlenmittel) Mₙ der Polymere beträgt vorzugsweise 400 bis 6000, insbesondere 1000 bis 4000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl^{®} ADR vertrieben. Als Kettenverlängerer besonders geeignet sind Joncryl^{®} ADR 4368, langkettige Acrylate wie in der EP Anm. Nr. 08166596.0 beschrieben und Cardura^{®} E10 der Fa. Shell.

Bisoxazoline sind im Allgemeinen erhältlich durch das Verfahren aus Angew. Chem. Int. Ed., Vol. 11 (1972), S. 287 - 288. Besonders bevorzugte Bisoxazoline und Bisoxazine sind solche, in denen das Brückenglied eine Einfachbindung, eine (CH₂)-Alkylengruppe, mit z = 2,3 oder 4 wie Methylen, Ethan-7,2-diyl, Propan-1,3-diyl, Propan-1,2-diyl, oder eine Phenylengruppe bedeutet. Als besonders bevorzugte Bisoxazoline seien 2,2'-βis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt. Weitere Beispiele sind: 2,2'-Bis(2-oxazolin, 2,2'-Bis(4-methyl-2-oxazolin), 2,2'-Bis(4,4'-dimethyl-2-oxazolin), 2,2'-Bis(4-ethyl-2-oxazolin), 2,2'-Bis(4,4'-diethyl-2-oxazolin), 2,2'-Bis(4-propyl-2-oxazolin), 2,2'-Bis(4-butyl-2-oxazolin), 2,2'-Bis(4-hexyl-2-oxazolin), 2,2'-Bis(4-phenyl-2-oxazolin), 2,2'-Bis(4-cyclohexyl-2-oxazolin), 2,2'-Bis(4-benzyl-2-oxazolin), 2,2'-p-Phenylen-bis(4-methyl-2-oxazolin), 2,2'-p-Phenylen-bis(4,4'dimethyl-2-oxazolin), 2,2'-p-Phenylen-bis(4methyl-2-oxazolin), 2,2'-m-Phenylen-bis(4,4'-dimethyl-2-oxazolin), 2,2'-Hexamethylen-bis(2-oxazolin), 2,2'-Octamethylen-bis(2-oxazolin), 2,2'-Decamethylen-bis(2-oxazolin), 2,2'-Ethylenbis(4-methyl-2-oxazolin), 2,2'-Tetramethylen-bis(4,4'dimethyl-2-oxazolin), 2,2'-9,9'-Diphenoxyethan-bis(2-oxazolin), 2,2'Cyclohexylen-bis(2-oxazolin) und 2,2'-Diphenylen-bis(2-oxazolin).

Bevorzugte Bisoxazine sind 2,2'-Bis(2-oxazin), Bis(2-oxazinyl)methan, 1,2-Bis(2-oxazinyl)ethan, 1,3-Bis(2-oxazinyl)propan oder 1,4-Bis(2-oxazinyl)butan, insbesondere 1,4-Bis(2-oxazinyl)benzol,1,2-Bis(2-oxazinyl)benzol oder 1,3-Bis(2-oxazinyl)benzol.

Carbodiimide und polymere Carbodiimide werden beispielsweise von der Fa. Lanxess unter dem Markennamen Stabaxol^{®} oder von der Fa. Elastogran unter dem Markennamen Elastostab^{®} vertrieben.

Beispiele sind: N,N'-Di-2,6-diisopropylphenylcarbodiimid, N,N'-Di-o-tolycarbodiimid, N,N'-Diphenylcarbodiimid, N,N'-Dioctyldecylcarbodiimid, N,N'-Di-2,6-dimethylphenylcarbodiimid, N-Tolyl-N'-cyclohexylcarbodiimid, N,N'-Di-2,6-di-tert.-butylphenylcarbodiimid, N-Tolyl-N'-phenylcarbodiimid, N,N'-Di-p-hydroxyphenylcarbodiimid, N,N'-Di-cyclohexylcarbodiimid, N,N'-Di-p-tolycarbodiimid, p-Phenylen-bis-di-o-tolycarbodiimid, p-Phenylen-bisdicyclohexylcarbodiimid, Hexamethylen-bis-dicyclohexylcarbodiimid, 4,4'-Dicyclohexylmethancarbodiimid, Ethylen-bis-diphenylcarbodiimid, N,N'-Benzylcarbodiimid, N-Octadecyl-N'-phenylcarbodiimid, N-Benzyl-N'phenylcarbodiimid, N-Octadecyl-N'-tolycarbodiimid, N-Cyclohexyl-N'tolycarbodiimid, N-Phenyl-N'-tolycarbodiimid, N-Benzyl-N'tolylcarbodiimid, N,N'-Di-o-ethylphenylcarbodiimid, N,N'-Di-p-ethylphenylcarbodiimid, N,N'-Di-o-isopropylphenylcarbodiimid, N,N'Di-p-isopropylphenylcarbodiimid, N,N'-Di-o-isobutylphenylcarbodiimid, N,N'-Di-p-isobutylphenylcarbodiimid, N,N'-Di-2,6-diethylphenylcarbodiimid, N,N'-Di-2-ethyl-6-isopropylphenylcarbodiimid, N,N'-Di-2-isobutyl-6-isopropylphenylcarbodiimid, N,N'-Di-2,4,6-trimethylphenylcarbodiimid, N,N'-Di-2,4,6-triisopropylphenylcarbodiimid, N,N'-Di-2,4,6-triisobutylphenylcarbodiimid, Di-isopropylcarbodiimid, Dimethylcarbodiimid, Diisobutylcarbodiimid, Dioctylcarbodiimid, t-Butylisopropylcarbodiimid, Di-ß-naphthylcarbodiimid und Di-t-butylcarbodiimid.

Der Kettenverlängerer wird in 0,01 bis 4 Gew.-%, bevorzugt in 0,1 bis 2 Gew.-%, und besonders bevorzugt in 0,2 bis 1 Gew.-%, bezogen auf den Polyester eingesetzt.

Als Diisocyanate sind bevorzugt Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3-und -1,4-diisocyanat, Bis(2-isocyanato-ethyl)fumarat, 1-Isocyanato-3,3,5-trimethyl-5-isocyanatomethylcyclohexan (Isophorondiisocyanat, IPDI), 2,4-und 2,6-Hexahydrotoluylendiisocyanat, Hexahydro-1,3- oder-1,4-phenylendiisocyanat, Benzidindiisocyanat, Naphthalin-7,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) sowie deren Isomerengemische. Weiterhinkommen partiell oder vollständig hydrierte Cycloalkylderivate des MDI, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4-Diisocyanatophenylperfluorethan, Phthalsäure-bis-isocyanatoethylester, 1-Chlormethylphenyl-2,4- oder -2,6-diisocyanat, 1-Brommethylphenyl-2,4- oder -2,6-diisocyanat, 3,3-Bis-chlormethylether-4,4'-diphenyldiisocyanat, schwefelhaltige, wie sie durch Umsetzung von 2 mol Diisocyanat mit 1 mol Thiodiglykol oder Dihydroxydihexylsulfid erhältlich sind, die der Dimerfettsäuren, oder Gemische aus zwei oder mehr der genannten in Frage. Besonders bevorzugt sind 1,6-Hexamethylendiisocyanat (HDI) und 4,4'-Diphenylmethandiisocyanat (MDI).

Vorzugsweise wird vor und/oder während Schritt c) mindestens ein CoKatalysator, insbesondere ausgewählt aus der Gruppe der Antimon- oder Cobaltsalze und/oder mindestens ein Stabilisator, insbesondere aus der Gruppe der anorganischen Phosphorsalze oder Phosphorsäuren, organischer Phosphorverbindungen oder Stabilisatoren aus der Gruppe der Irganox^{®} Typen, zugesetzt. Dieser wird bevorzugt in einer Menge von 10 bis 10000 ppm, besonders bevorzugt von 10 bis 1000 ppm eingesetzt.

Als Additive sind praktisch alle Additive denkbar, die in der Polymerindustrie eingesetzt werden können, wie z.B.:
- Gleitmittel, wie z.B. Metallstearate,
- Formtrennmittel, wie z.B. Fettsäurealkoholate oder Paraffinwachse,
- Silikonverbindungen,
- Nukleierungsmittel,
- Füllstoffe, wie z.B. Titandioxid, Talkum, Gips, Kalk, Kreide, Silikate, Tonerden, Russ, Lignin, Zellstoff, Stärke, Nano-Partikel und
- anorganische oder organische Pigmente zur Einfärbung oder Farbkorrektur,
- Mischungen hiervon.

Diese Aufzählung soll hierbei nicht als abschließende Liste möglicher Additive angesehen werden.

Aus diversen Patenten ist bekannt, dass Additive (z.B. phosphorhaltige Stabilisatoren, wie Phosphorsäure oder phosphorige Säure) bei der Herstellung von Polymeren zugegeben werden. Aus US 6,399,716 geht hervor, dass bei einem Gehalt von < 0,02 Gew.-% Stabilisator die Farbe des Produkts gelb/braun wird, während bei einem Gehalt > 2 Gew.-% der Reaktionsfortschritt ungenügend sei. Daneben können eine Reihe weiterer Additive zugegeben werden, wie z.B. Hitzestabilisatoren, Antioxidantien, Nukleierungsmittel, Flammschutzmittel, Antistatika, Verarbeitungshilfsmittel, UV-Stabilisatoren sowie Verstärkungsmaterialien oder Füllstoffe.

Vorzugsweise erfolgt die Veresterung oder Umesterung in Schritt b) bei einer Temperatur von 150 bis 250°C und einem Druck von 0,7 bis 4 bar. Dabei werden in Schritt b) und/oder im Anschluss an Schritt b) vorzugsweise Nebenprodukte oder Kondensationsprodukte, die bei Normalbedingungen ab 60 °C dampfförmig vorliegen, insbesondere Wasser oder Methanol, zumindest partiell oder ganz entfernt.

Es ist weiter bevorzugt, dass in Schritt c) die Poly- oder Copolykondensation zweistufig ausgeführt wird, wobei in einem ersten Teilschritt c1) aus dem aus Stufe b) erhaltenen Reaktionsprodukt durch Polykondensation oder Copolykondensation ein Polyesterprepolymer oder Copolyesterprepolymer hergestellt und in einem sich anschließenden Teilschritt c2) aus dem Polyesterprepolymer oder Copolyesterprepolymer aus Teilschritt c1) durch Polykondensation oder Copolykondensation ein Polyester oder Copolyester mit einer relativen Viskosität R.V. von mindestens 1,5 hergestellt wird, wobei die Teilschritte in einem oder mehreren Reaktoren durchgeführt werden. Dabei wird in Schritt c1) bei einem Druck von 0,1 bar bis 2 bar, besonders bevorzugt von 0,15 bar bis 1,0 bar, insbesondere von 0,2 bar bis 0,7 bar, und bei Temperaturen von 160 bis 300 °C, bevorzugt von 200 bis 260 °C, und vorzugsweise in Schritt c2) unter gegenüber Normalbedingungen vermindertem Druck, bevorzugt bei einem Druck von 0,1 mbar bis 30 mbar, besonders bevorzugt von 0,2 mbar bis 10 mbar, insbesondere von 0,4 mbar und 5 mbar, und bei Temperaturen von 200 bis 300 °C, bevorzugt von 220 bis 270 °C, durchgeführt.

Das erfindungsgemäße Verfahren sieht weiterhin vor, sofern die relative Viskosität, die mit dem Verfahren nach Verfahrensschritt c) erreicht wird, für die angestrebten Anwendungen noch nicht ausreichend ist, dass das Reaktionsprodukt nach dem Schritt c) nach dem Abkühlen und Überführen in eine Granulat- und/oder Pulverform sowie Kristallisation einer Nachkondensation in der festen Phase unterzogen wird. Derartige Nachkondensationen in der festen Phase (SSP) sind aus der Polyesterchemie bekannt. Die dort bekannten Verfahrensbedingungen können auch für die Nachkondensation beim erfindungsgemäß hergestellten heteroaromatischen Polyester angewandt werden. Bevorzugte Temperaturen für die Nachkondensation der beschriebenen Polyester in der Festphase liegen im Bereich von ca. 10 - 50 K unterhalb der Schmelztemperatur des Polymers. Zur Nachkondensation wird, wie im Stand der Technik bekannt, ein getrocknetes Inertgas im Gegenstrom in einem geeigneten Reaktor zu den Granulaten geführt. Als Inertgas kann dabei ein Inertgas aus der Gruppe Stickstoff, Kohlendioxid und/oder Argon eingesetzt werden. Alternativ kann bei der Festphasennachkondensation (SSP) auch bevorzugterweise mit einem Druckniveau von 0,001 bis 0,2 bar im angegebenen Temperaturbereich gearbeitet werden.

Die nach dem erfindungsgemäßen Verfahren nach Verfahrensschritt c) hergestellten Granulate und/oder Pulver können auch einer Nachbehandlung in der Weise unterzogen werden, dass die Granulate und/oder das Pulver von Reaktionsprodukten befreit werden. Solche flüchtige Reaktionsprodukte oder Reaktionsnebenprodukte können z.B. Acetaldehyd, Methyldioxolan, Acrolein, Wasser oder Tetrahydrofuran sein. Die Befreiung von diesen Nebenprodukten kann dadurch erfolgen, dass ein Gasstrom oder eine Mischung aus Gasen aus der Gruppe Luft, Stickstoff oder CO₂ mit einem Wassertaupunkt von bevorzugt -100 °C bis 10 °C, besonders bevorzugt von -70 °C bis -20 °C bei einer Temperatur von 80 bis 200 °C, bevorzugt von 100 bis 150 °C unterzogen werden. Auch können die beiden Verfahrensstufen der Nachkondensation in der festen Phase und die Nachbehandlung zur Entfernung flüchtiger Verbindungen in einer gemeinsamen Verfahrensstufe im angegebenen Temperaturbereich mit den angegebenen Gasen oder Gasmischungen oder bei Unterdruck erfolgen.

Durch die beiden vorstehend beschriebenen Maßnahmen können die mechanischen und physikalischen Eigenschaften der hergestellten Granulate und somit auch der daraus hergestellten-Formteile nachhaltig verbessert werden.

Das erfindungsgemäße Verfahren - wie vorstehend beschrieben - eignet sich besonders bevorzugt zur Herstellung von Polybutylensuccinat-co-terphthalat und Polybutylenadipat-co-terphthalat.

Die hergestellten Polyester oder Copolyester können mit Verarbeitungsmaschinen gemäß des Standes der Technik der Kunststoffverarbeitung nach dem Erwärmen durch Extrusion oder Spritzguss oder Gießen zu biologisch abbaubaren Filmen, Folien, Platten, Fasern, Filamenten, Schäumen oder Formkörpem verarbeitet werden. Die erfindungsgemäß hergestellten Polymere können hierzu direkt nach ihrer Herstellung und ggf, zwischengeschalteten Trocknungsprozessen verarbeitet werden oder in Form von Mischungen oder Blends oder Compounds mit anderen, insbesondere biologisch abbaubaren Polymeren wie Polyglycolsäuren, Polymilchsäuren, Polyhydroxyalkanoaten, Polycaprolactonen zu Artikeln verarbeitet werden.

Als biologisch abbaubar im Sinne dieser Erfindung gilt die Definition gemäß DIN EN 13432 wobei ein prozentualer Grad des Abbaus von mindestens 90% zu erfüllen ist.

Vorzugsweise enthält der Polyester oder Copolyester von 0,1% bis 100% und besonders bevorzugt von 5,0% bis 99%, bezogen auf die Summe aller Kohlenstoffatome, solche Kohlenstoffatome, die aus nachwachsen Quellen zugänglich sind, insbesondere unter Verwendung von Monomeren oder Oligomeren aus der Gruppe von biobasierender 2,5-Furandicabonsäure, biobasierender Terephthalsäure, biobasierender Bernsteinsäure, biobasierender Adipinsäure, biobasierender Sebazinsäure, biobasierendem Ethylenglykol, biobasierendem Propandiol, biobasierendem 1,4-Butandiol, biobasierendem Isosorbid biobasierender Milchsäure, biobasierender Zitronensäure, biobasierendem Glycerin, biobasierender Polymilchsäure oder biobasierender Polyhydroxybuttersäure oder biobasierender Polyhydroxybuttersäurederivate.

Es ist weiter bevorzugt, dass der Polyester oder Copolyester mindestens eine heteroaromatische oder aromatische Dicarbonsäure in einer Menge von 20 bis 80 mol%, bevorzugt 40 bis 60 mol% und mindestens eine aliphatische Dicarbonsäure in einer Menge von 80 bis 20 mol%, bevorzugt von 60 bis 40 mol%, jeweils bezogen auf die Summe aller eingesetzten Dicarbonsäuren, enthält.

Es wird ein biologisch abbaubarer Polymerblend bereitgestellt, der aus 10 bis 90 Gew.% des Polyesters oder Copolyesters sowie 90 bis 10 Gew.% eines bioabbaubaren Polymers, insbesondere aus der Gruppe Polyglykolsäure, Polymilchsäure, Polyhydroxybuttersäure, Polyhydroxybuttersäure-co-polyester, Stärke, Cellulose, Polycaprolacton, Lignin, sowie 0 bis 5 Gew.% einer nicht-biobasierenden Komponente besteht oder diese im Wesentlichen enthält.

Die Polyester oder Copolyester finden Verwendung bei der Herstellung von kompostierbaren Formkörpern, biologisch abbaubaren Schäumen und Papierbeschichtungsmitteln.

Anhand der nachfolgenden Beispiele soll der erfindungsgemäße Gegenstand näher erläutert werden.

### Beispiele

In den Versuchen wurden die untenstehend angegebenen Mengen Adipinsäure oder Bernsteinsäure sowie Terephthalsäure und Butandiol zusammen mit dem Katalysator in einem 500 mL Dreihalskolben mit aufgesetzter Kolonne und Rückflusskühler unter einer Stickstoffatmosphäre vorgelegt. Nachdem eine Heizbadtemperatur von 230°C erreicht war, wurde das Gefäß mit der Reaktionsmischung unter N₂-Überleitung in das Heizmedium abgesenkt und der Rührer gestartet (t₀). Eine Drehzahl von 150 U/min während des Versuchs beibehalten. Über eine bei 105°C betriebene Destillationskolonne wurden die entstehenden Brüden abgetrennt und das überdestillierende Wasser aufgefangen. Nach jeweils 7:15 h wurden die entsprechenden Monomere / Veresterungsprodukte erhalten (siehe Tabelle 1 und 2).

In den nachfolgenden Tabellen werden folgende Abkürzungen verwendet:
- ADS: Adipinsäure
- SAC: Bernsteinsäure
- PTA: Terephthalsäure
- BDO: 1,4-Butandiol
- MV: Mischungsverhältnis Dicarbonsäuren / Dialkohol (mol/mol)
- Kat.: Katalysator
- TiTBT: Titantetrabutylat
- R.V.: relative Viskosität
- t: Reaktionszeit
- T: Herrschende Reaktionstemperatur
- COOH: Gesamtzahl an Carboxylgruppen
- MW: Molmasse (Gewichtsmittel), ermittelt mittels GPC

**Tabelle 1**

| **Versuch** | **PTA [g]** | **ADS [g]** | **SAC [g]** | **BDO [g]** | **MV** | **Kat.** | **Kat. [ppm]** |
|---|---|---|---|---|---|---|---|
| V4M | 166,1 | 0 | 118,1 | 270,4 | 1:1,5 | **Chelat 1** | 200 ppm Ti |
| V5M | 166,1 | 146,1 | 0 | 270,4 | 1:1,5 | **TiTBT** | 200 ppm Ti |
| V6M | 168,2 | 148,1 | 0 | 274,4 | 1:1,5 | **Chelat 2** | 200 ppm Ti |
| | | | | | | **Hochrein** | |
| V7M | 169,2 | 148,8 | 0 | 275,4 | 1:1,5 | **Chelat 2** | 200 ppm Ti |

Im erfindungsgemäßen Versuch V4M wurde ein Polytetramethylensuccinat-Terephthalat (PBST) hergestellt. Im Vergleichsbeispiel V5M wurde ein nichthydrolysestabiler Katalysator TiTBT eingesetzt. Im erfindungsgemäßen Versuch V6M wurde ein hochreiner Ti-Chelat-Katalysator zur Herstellung von PBST eingesetzt. Im erfindungsgemäßen Versuch V7M wurde ein Ti-Chelat-Katalysator zur Herstellung von Polybutylenadipat-terephthalat (PBAT) eingesetzt.

**Tabelle 2**

| **Versuch** | **t [h:min]** | **Temperatur [°C]** | **Destillat [mL]** | **COOH [mmol/kg]** | **R.V.** | **Ausbeute [%] Veresterungsprodukt** |
|---|---|---|---|---|---|---|
| V4M | 7:15 | 230 | 87 | 47,9 | 1,047 | 90,5 |
| V5M | 7:15 | 230 | 80 | 287 | 1,048 | 90,8 |
| V6M | 7:15 | 230 | 73 | 36,1 | 1,052 | 90,4 |
| V7M | 7:15 | 230 | 79 | 46,7 | 1.050 | 90,6 |

Für die anschließenden Polykondensationsreaktionen wurden jeweils 50 g der zuvor hergestellten Veresterungsprodukte in eine Labor-Glas-Polykondensations-Apparatur gegeben. Nach Erreichen einer Heizbadtemperatur von 230°C wurde die Apparatur mit dem Veresterungsprodukt unter N2-Überleitung in das Heizbad abgesenkt. Ca. 15 Minuten später wurde der Rührer eingeschaltet und Vakuum angelegt sowie der Druck schrittweise abgesenkt und die Solltemperatur für das Heizbad auf 250°C erhöht, (die dann nach ca. 60 Minuten erreicht wurde). Nach weiteren 120 min wurde die Heizbad Temperatur auf 255°C erhöht wurde. Ca. 15 Minuten nach Einschalten des Rührers mit einer Drehzahl von 200 rpm wurde das Endvakuum von ca. 0,5 -1,5 mbar erreicht. Sechs Stunden nach Beginn des Anlegens des Vakuums wurde Stickstoff auf die Apparatur gegeben und folgende Proben/Polykondensationsprodukte erhalten (s. Tabelle 3).

**Tabelle 3**

| **Versuch** | **T [°C]** | **t [h:min]** | **COOH [mmol/kg]** | **R.V.** | **MW [Da]** |
|---|---|---|---|---|---|
| V4M | 255 | 6:00 | 60,8 | 1,649 | 106350 |
| V5M | 255 | 6:00 | 19,6 | 1,441 | 82260 |
| V6M | 255 | 6:00 | 28,0 | 1,852 | 127700 |
| V7M | 255 | 6:00 | 35,4 | 1,660 | 118450 |

## Patentansprüche

1. Verfahren zur kontinuierlichen oder diskontinuierlichen Herstellung eines hochmolekularen Polyesters oder Copolyesters, bei dem
a) in einem ersten Schritt die Gesamtmenge der zu Kondensationsreaktionen befähigten Monomere oder Oligomere enthaltend mindestens eine aromatische oder heteroaromatische C₄-C₁₂-Dicarbonsäure oder deren Diestern, mindestens eine aliphatische C₂-C₁₂-Dicarbonsäure oder deren Diester, mindestens ein C₂-C₁₂-Alkanol mit mindestens zwei Hydroxylgruppen durch Mischen zu einer Paste verarbeitet werden, wobei während der Herstellung der Paste oder in die fertig hergestellte Paste mindestens ein Katalysator ausgewählt aus der Gruppe bestehend aus von Ethanolaminen abgeleiteten Chelaten der Titansalze oder der Zirkonsalze einzeln und/oder deren Mischungen oder Lösungen zugegeben wird, wobei die Gesamtmenge oder eine Hauptmenge von mindestens 50 Gew.-%, bezogen auf die Gesamtmenge des Katalysators, zugesetzt wird,
b) in einem zweiten Schritt die Paste durch Erhöhen der Temperatur und unter Abdestillieren von Kondensationsprodukten oder Umesterungsprodukten zu einem Veresterungs- oder Umesterungsprodukt umgesetzt wird und
c) das aus Schritt b) erhaltene Veresterungs- oder Umesterungsprodukt unter gegenüber Normalbedingungen vermindertem Druck bis zu einem Molekulargewicht M_{w} von mindestens 100.000 g/mol und einer relativen Viskosität von 1,5 bis 2,0 polykondensiert oder copolykondensiert wird.

2. Verfahren nach Anspruch 1,
**dadurch gekennzeichnet, dass**
• die mindestens eine aromatische oder heteroaromatische C₄-C₁₂-Dicarbonsäure ausgewählt ist aus der Gruppe bestehend aus Terephthalsäure, Isophthalsäure, Naphtalindicarbonsäure oder 2,5-Furandicabonsäure oder deren Ester, Anhydride oder Mischungen hiervon, und/oder
• die mindestens eine aliphatische C₂-C₁₂-Dicarbonsäuren ausgewählt ist aus der Gruppe bestehend aus Malonsäure, Oxalsäure, Bernsteinsäure, Glutarsäure, 2-Methylglutarsäure, 3-Methylglutarsäure, Adipinsäure, Pimelinsäure, Korksäure, Acelainsäure, Sebacinsäure, Undecandisäure, Dodecandisäure, Brassylsäure, Tetradecandisäure, 3,3-Dimethylpentandisäure, Fumarsäure, 2,2-Dimethylglutarsäure, Suberinsäure, Dimerfettsäure, 1,3-Cyclopentandi-carbonsäure, 1,4-Cyclohexandicarbonsäure, 1,3-Cyclohexandicarbon-säure, Diglykolsäure, Itaconsäure, Maleinsäure, Maleinsäureanhydrid, 2,5-Norbornandicarbonsäure oder deren Ester, Anhydride oder Mischungen hiervon und/oder
• das mindestens eine C₂-C₁₂-Alkanol ausgewählt ist aus der Gruppe bestehend aus Ethylenglykol, 1,2-Propandiol, 1,3-Propandiol, 1,2-Butandiol, 1,4-Butandiol, 1,5-Pentandiol, 1,6-Hexandiol, 2,4-Dimethyl-2-ethylhexan-1,3-diol, 2,2-Dimethyl-1,3-propandiol, 2-Ethyl-2-butyl-1,3-propandiol, 2-Ethyl-2-isobutyl-1,3-propandiol, 2,2,4-Trimethyl-1,6-hexan-diol, Cyclopentandiol, 1,4-Cyclohexandiol, 1,2-Cyclohexandimethanol, 1,3-Cyclohexandimethanol, 1,4-Cyclohexandimethanol oder 2,2,4,4-Tetra-methyl-1,3-cyclobutandiol oder Mischungen hiervon.

3. Verfahren nach einem der vorhergehenden Ansprüche,
**dadurch gekennzeichnet, dass** in Schritt a) weitere Comonomere zugegeben werden, die bevorzugt ausgewählt sind aus der Gruppe bestehend aus Milchsäure, Milchsäureoligomere, Hydroxybuttersäure, Hydroxybuttersäureoligomere, Polyethylenglykol, Polypropylenglykol, Glycerin, Trimethylolpropan, Pentaerytrit oder Zitronensäure oder Mischungen hiervon.

4. Verfahren nach einem der vorhergehenden Ansprüche,
**dadurch gekennzeichnet, dass** in Schritt a) das stöchiometrische Verhältnis der Gesamtmenge an Carboxyl-Funktionalitäten zur Gesamtmenge der Hydroxyl-Funktionalitäten im Bereich von 1:0,5 bis 1:5,0, bevorzugt von 1:0,9 bis 1:3,0, besonders bevorzugt 1:1,1 bis 1:2,0 liegt.

5. Verfahren nach einem der vorhergehenden Ansprüche,
**dadurch gekennzeichnet, dass** in Schritt a) die Paste durch technische Maßnahmen wie Rührorgane, Mischdüsen, Zirkulationsleitungen etc. in einem fließ- sowie mittels Pumpen förderfähigen Zustand gehalten wird und ein Aussedimentieren einzelner Komponenten der Paste verhindert wird.

6. Verfahren nach einem der vorhergehenden Ansprüche,
**dadurch gekennzeichnet, dass** der der Katalysator bevorzugt eine Reinheit von > 99,9 Gew.% Titan oder Zirkon aufweist, wobei der Katalysator bevorzugt in einer Konzentration von 1 bis 20.000 ppm, bevorzugt von 10 bis 10.000 ppm, bezogen auf die Gewichtssumme aus den eingesetzten Monomeren und Oligomeren, eingesetzt wird.

7. Verfahren nach einem der vorhergehenden Ansprüche,
**dadurch gekennzeichnet, dass** die Veresterung oder Umesterung in Schritt b) bei einer Temperatur von 150 bis 250°C und einem Druck von 0,7 bis 4 bar erfolgt, wobei bevorzugt in Schritt b) und/oder im Anschluss an Schritt b) Nebenprodukte oder Kondensationsprodukte, die bei Normalbedingungen ab 60°C dampfförmig vorliegen, insbesondere Wasser oder Methanol, zumindest partiell oder ganz entfernt werden.

8. Verfahren nach einem der vorhergehenden Ansprüche,
**dadurch gekennzeichnet, dass** in Schritt c) die Poly- oder Copolykondensation zweistufig ausgeführt wird, wobei in einem ersten Teilschritt c1) aus dem aus Stufe b) erhaltenen Reaktionsprodukt durch Polykondensation oder Copolykondensation ein Polyesterprepolymer oder Copolyesterprepolymer hergestellt und in einem sich anschließenden Teilschritt c2) aus dem Polyesterprepolymer oder Copolyesterprepolymer aus Teilschritt c1) durch Polykondensation oder Copolykondensation ein Polyester oder Copolyester mit einer relativen Viskosität von 1,5 bis 2,0 hergestellt wird, wobei die Teilschritte in einem oder mehreren Reaktoren durchgeführt werden, wobei bevorzugt in Schritt c1) bei einem Druck von 0,1 bar bis 2 bar, besonders bevorzugt von 0,15 bar bis 1,0 bar, insbesondere von 0,2 bar bis 0,7 bar, und bei Temperaturen von 160 bis 300 °C, bevorzugt von 200 bis 260 °C, und/oder vorzugsweise in Schritt c2) unter gegenüber Normalbedingungen vermindertem Druck, bevorzugt bei einem Druck von 0,1 mbar bis 30 mbar, besonders bevorzugt von 0,2 mbar bis 10 mbar, insbesondere von 0,4 mbar bis 5 mbar, und bei Temperaturen von 200 bis 300 °C, bevorzugt von 220 bis 270 °C, durchgeführt wird.

9. Verfahren nach einem der vorhergehenden Ansprüche,
**dadurch gekennzeichnet, dass** vor und/oder während Schritt c) oder vor Schritt c1) oder während Schritt c1) oder c2) mindestens eine der folgenden Komponenten, vorzugsweise in einer Konzentration von 0,01 bis 1,0 Gew.%, bezogen auf die Masse des Polyesters oder Copolyesters, zugegeben wird:
• mindestens ein Co-Katalysator, insbesondere ausgewählt aus der Gruppe der Zinn-, Antimon- oder Cobaltsalze und/oder mindestens ein Stabilisator, insbesondere aus der Gruppe der anorganischen Phosphorsalze oder Phosphorsäuren, organischer Phosphorverbindungen oder Stabilisatoren aus der Gruppe der Irganox^{®} Typen
• Gleitmittel, wie z.B. Metallstearate,
• Formtrennmittel, wie z.B. Fettäurealkoholate oder Paraffinwachse,
• Silikonverbindungen,
• Nukleierungsmittel,
• Füllstoffe, wie z.B. Titandioxid, Talkum, Gips, Kalk, Kreide, Silikate, Tonerden, Russ, Lignin, Zellstoff, Stärke, Nano-Partikel und
• anorganische oder organische Pigmente zur Einfärbung oder Farbkorrektur,
• Mischungen hiervon,

10. Verfahren nach mindestens einem der vorhergehenden Ansprüche, **dadurch gekennzeichnet, dass**
a) das in Schritt b) erzeugte Reaktionsprodukt auf eine relative Viskosität R.V. von 1,02 bis 1,1, bevorzugt von 1,03 bis 1,08, besonders bevorzugt von 1,04 bis 1,06 und/oder
b) der in Schritt c), insbesondere der in Schritt c2) erzeugte Polyester auf eine relative Viskosität von 1,5 bis 2,50, bevorzugt von 1,55 bis 2,0, besonders bevorzugt von 1,60 bis 1,90 eingestellt wird.

11. Verfahren nach mindestens einem der vorhergehenden Ansprüche, **dadurch gekennzeichnet, dass** das Reaktionsprodukt vor, während oder nach Schritt c) einem Kettenverlängerungsschritt durch Zugabe einer reaktiven Verbindung ausgewählt aus der Gruppe der di- oder höherfunktionellen Epoxide, Carbodiimide oder Diisocyanate, Oxazoline oder Dianhydride unterzogen wird, insbesondere in einer Menge von 0,01 bis 4 Gew.% bezogen auf die Masse des Polyesters oder Copolyesters.

12. Verfahren nach mindestens einem der vorhergehenden Ansprüche, **dadurch gekennzeichnet, dass** das vor, während oder nach Schritt c) erhaltene Reaktionsprodukt nach dem Abkühlen und Überführen in eine Granulat- und/oder Pulverform sowie Kristallisation mindestens einem der folgenden Schritten unterzogen wird:
• Nachkondensation in der Festphase zur Erhöhung der Molmasse bei einer Temperatur von 100 - 230°C, aber höchstens 10 K unterhalb der Schmelztemperatur des Polyesters oder Copolyesters unter Durchleitung eines Inertgases oder einer Mischung von Inertgasen aus der Gruppe Stickstoff, Kohlendioxid, Argon oder durch Absenken auf einen gegenüber Atmosphärendruck reduzierten Druck von Druckniveau 0,01 bis 0,2 bar
• Entfernung von einem oder mehreren flüchtigen Reaktions- oder Nebenprodukten aus der Gruppe Acetaldehyd, Methyldioxolan, Acrolein, Wasser oder Tetrahydrofuran unter Durchleiten eines Gasstromes oder einer Mischung aus Gasen aus der Gruppe Luft, Stickstoff, Argon oder Kohlendioxyd mit einem Wassertaupunkt von -100°C bis 10°C und bevorzugt von -70°C bis - 20°C bei einer Temperatur von 80 bis 200°C und bevorzugt 100 bis 150°C.

13. Verwendung des nach einem der Ansprüche 1 bis 12 hergestellten Polyesters oder Copolyesters zur Herstellung von kompostierbaren Formkörpern, biologisch abbaubaren Schäumen und Papierbeschichtungsmitteln.

## Claims

1. Method for the continuous or discontinuous production of a high-molecular polyester or copolyester, in which
a) in a first step,
the total quantity of the monomers or oligomers which are capable of condensation reactions,
comprising at least one aromatic or heteroaromatic C₄-C₁₂ dicarboxylic acid or the diesters thereof, at least one aliphatic C₂-C₁₂ dicarboxylic acid or the diester thereof, at least one C₂-C₁₂ alkanol with at least two hydroxyl groups,
are processed by mixing to form a paste,
during the production of the paste or into the already produced paste at least one catalyst selected from the group consisting of chelates of titanium salts or of zirconium salts derived from ethanol amines separately and/or mixtures or solutions thereof being added, the total quantity or a main quantity of at least 50% by weight, relative to the total quantity of the catalyst, being added,
b) in a second step, the paste is converted by increasing the temperature and with distilling-off of condensation products or transesterification products to form an esterification- or transesterification product and
c) the esterification- or transesterification product obtained from step b) is polycondensed or copolycondensed at reduced pressure relative to normal conditions up to a molecular weight Mₙ of 100,000 to 150,000 g/mol and to a relative viscosity of 1.5 to 2.0.

2. Method according to claim 1,
**characterised in that**
• the at least one aromatic or heteroaromatic C₄-C₁₂ dicarboxylic acid is selected from the group consisting of terephthalic acid, isophthalic acid, naphthalene dicarboxylic acid or 2,5-furandicarboxylic acid or the esters, anhydrides or mixtures thereof, and/or
• the at least one aliphatic C₂-C₁₂ dicarboxylic acid is selected from the group consisting of malonic acid, oxalic acid, succinic acid, glutaric acid, 2-methylglutaric acid, 3-methylglutaric acid, adipic acid, pimelic acid, octanedioic acid, azelaic acid, sebacic acid, undecanedioic acid, dodecanedioic acid, brassylic acid, tetradecanedioic acid, 3,3-dimethylpentanedioc acid, fumaric acid, 2,2-dimethylglutaric acid, suberic acid, dimer fatty acid, 1,3-cyclopentanedicarboxylic acid, 1,4-cyclohexanedicarboxylic acid, 1,3-cyclohexanedicarboxylic acid, diglycolic acid, itaconic acid, maleic acid, maleic acid anhydride, 2,5-norbornanedicarboxylic acid or the esters, anhydrides thereof or mixtures hereof, and/or
• the at least one C₂-C₁₂ alkanol is selected from the group consisting of ethylene glycol, 1,2-propanediol, 1,3-propanediol, 1,2-butanediol, 1,4-butanediol, 1,5-pentanediol, 1,6-hexanediol, 2,4-dimethyl-2-ethylhexane-1,3-diol, 2,2-dimethyl-1,3-propanediol, 2-ethyl-2-butyl-1,3-propanediol, 2-ethyl-2-iso-butyl-1,3-propanediol, 2,2,4-trimethyl-1,6-hexanediol, cyclopentanediol, 1,4-cyclohexanediol, 1,2-cyclohexanedi-methanol, 1,3-cyclohexanedimethanol, 1,4-cyclohexanedi-methanol or 2,2,4,4-tetramethyl-1,3-cyclobutanediol or mixtures hereof.

3. Method according to one of the preceding claims,
**characterised in that**, in step a), further comonomers are added, which preferably are selected from the group consisting of lactic acid, lactic acid oligomers, hydroxybutanoic acid, hydroxybutanoic acid oligomers, polyethylene glycol, polypropylene glycol, glycerine, trimethylolpropane, pentaerythrite or citric acid or mixtures hereof.

4. Method according to one of the preceding claims,
**characterised in that**, in step a), the stoichiometric ratio of the total quantity of carboxyl functionalities to the total quantity of hydroxyl functionalities is in the range of 1 : 0.5 to 1 : 5.0, preferably of 1 : 0.9 to 1 : 3.0, particularly preferred is 1 : 1.1 to 1 : 2.0.

5. Method according to one of the preceding claims,
**characterised in that**, in step a), the processing to form the paste is effected at temperatures in the range of +10°C to +120°C, preferably the paste being maintained in a flowable and also conveyable state by means of pumps due to technical measures, such as stirring members, mixing nozzles, circulation lines etc. and sedimenting-out of individual components of the paste being prevented.

6. Method according to one of the preceding claims,
**characterised in that** the catalyst has a purity of> 99.9% by weight of titanium or zirconium, the catalyst preferably being used in a concentration of 1 to 20,000 ppm, preferably of 10 to 10,000 ppm, relative to the weight sum of the monomers and oligomers which are used.

7. Method according to one of the preceding claims,
**characterised in that** the esterification or transesterification is effected, in step b), at a temperature of 150 to 250°C and at a pressure of 0.7 to 4 bar, wherein preferably, in step b) and/or subsequent to step b), by-products or condensation products which are present in vaporous form during normal conditions from 60°C onwards, in particular water or methanol, are removed at least partially or entirely.

8. Method according to one of the preceding claims,
**characterised in that**, in step c), the poly- or copolycondensation is implemented in two steps, a polyester prepolymer or copolyester prepolymer being produced, in a first partial step c1), from the reaction product, obtained from step b), by polycondensation or copolycondensation and, in a subsequent partial step c2), a polyester or copolyester with a relative viscosity of 1.5 to 2-0 being produced from the polyester prepolymer or copolyester prepolymer from partial step c1), by polycondensation or copolycondensation, the partial steps being implemented in one or more reactors, the implementation preferably taking place, in step c1), at a pressure of 0.1 bar to 2 bar, particularly preferred of 0.15 bar to 1.0 bar, in particular of 0.2 bar to 0.7 bar, and at temperatures of 160 to 300°C, preferably of 200 to 260°C, and/or preferably, in step c2), at reduced pressure relative to normal conditions, preferably at a pressure of 0.1 mbar to 30 mbar, particularly preferred of 0.2 mbar to 10 mbar, in particular of 0.4 mbar to 5 mbar, and at temperatures of 200 to 300°C, preferably of 220 to 270°C.

9. Method according to one of the preceding claims,
**characterised in that** there is added, before and/or during step c) or before step c1) or during step c1) or c2), at least one of the following components, preferably in a concentration of 0.01 to 1.0 % by weight relative to the mass of the polyester or copolyester:
• at least one co-catalyst, in particular selected from the group of tin-, antimony- or cobalt salts and/or at least one stabiliser, in particular from the group of inorganic phosphorus salts or phosphorus acids, organic phosphorus compounds or stabilisers from the group of the Irganox^{®} types,
• lubricants, such as e.g. metal stearates,
• mould-release agents, such as e.g. fatty acid alcoholates or paraffin waxes,
• silicone compounds,
• nucleation agents,
• fillers, such as e.g. titanium dioxide, talcum, gypsum, lime, chalk, silicates, clays, carbon black, lignin, cellulose, starch, nanoparticles and
• inorganic or organic pigments for colouring or colour correction,
• mixtures hereof.

10. Method according to at least one of the preceding claims, **characterised in that**
a) the reaction product produced in step b) is adjusted to a relative viscosity R.V. of 1.02 to 1.1, preferably of 1.03 to 1.08, particularly preferred of 1.04 to 1.06 and/or
b) the polyester produced in step c), in particular in step c2), is adjusted to a relative viscosity of 1.5 to 2.50, preferably of 1.55 to 2.0, particularly preferred of 1.60 to 1.90.

11. Method according to at least one of the preceding claims, **characterised in that** the reaction product, before, during or after step c), is subjected to a chain-lengthening step by addition of a reactive compound selected from the group of di- or higher-functional epoxides, carbodiimides or diisocyanates, oxazolines or dianhydrides, in particular in a quantity of 0.01 to 4% by weight, relative to the mass of the polyester or copolyester.

12. Method according to at least one of the preceding claims, **characterised in that** the reaction product obtained before, during or after step c), after cooling and conversion into a granulate- and/or powder form and also crystallisation, is subjected to at least one of the following steps:
• postcondensation in the solid phase in order to increase the molar mass at a temperature of 100 - 230°C, but at most 10 K below the melting temperature of the polyester or copolyester with delivery of an inert gas or a mixture of inert gases from the group, nitrogen, carbon dioxide, argon or by lowering to a reduced pressure relative to atmospheric pressure of pressure level 0.01 to 0.2 bar
• removal of one or more volatile reaction- or by-products from the group acetaldehyde, methyldioxolane, acrolein, water or tetrohydrofuran with delivery of a gas flow or a mixture of gases from the group, air, nitrogen, argon or carbon dioxide with a water dew point of -100°C to 10°C and preferably of-70°C to -20°C at a temperature of 80 to 200°C and preferably 100 to 150°C.

13. Use of the polyester or copolyester produced according to one of the claims 1 to 12 for the production of compostible moulded articles, biodegradable foams and paper-coating means.

## Revendications

1. Procédé de préparation continue ou discontinue d'un polyester ou d'un copolyester à grande masse moléculaire, dans lequel :
a) dans une première étape, on met en oeuvre par mélange pour obtenir une pâte la quantité totale des monomères ou oligomères pouvant subir des réactions de condensation, contenant au moins un acide dicarboxylique aromatique ou hétéroaromatique en C₄-C₁₂ ou des diesters de ce dernier, au moins un acide dicarboxylique aliphatique en C₂-C₁₂ ou des diesters de ce dernier, au moins un alcanol en C₂-C₁₂ comportant au moins deux groupes hydroxyle, ce à l'occasion de quoi on ajoute, pendant la fabrication de la pâte ou à la pâte fabriquée finie, au moins un catalyseur choisi dans le groupe consistant en les chélates dérivés d'éthanolamines de sels de titane ou de sels de zirconium, à titre individuel et/ou en mélanges ou en solutions, l'addition portant sur la quantité totale ou sur une quantité principale d'au moins 50 % en poids par rapport à la quantité totale du catalyseur.
b) dans une deuxième étape, on convertit en un produit d'estérification ou de transestérification la pâte par élévation de la température, et par élimination par distillation de produits de condensation ou de produits de transestérification, et
c) on soumet à une polycondensation ou à une copolycondensation le produit d'estérification ou de transestérification obtenu dans l'étape b), sous une pression diminuée par rapport aux conditions normales, jusqu'à une masse moléculaire M_{w} d'au moins 100 000 g/mol et une viscosité relative de 1,5 à 2,0.

2. Procédé selon la revendication 1, **caractérisé en ce que**
- le ou les acides dicarboxyliques aromatiques ou hétéroaromatiques en C₄-C₁₂ sont choisis dans le groupe consistant en l'acide téréphtalique, l'acide isophtalique, l'acide naphtalènedicarboxylique ou l'acide 2,5-furannedicarboxylique, ou les esters, anhydrides ou mélanges de ceux-ci, et/ou
- le ou les acides dicarboxyliques aliphatiques en C₂-C₁₂ sont choisis dans le groupe consistant en l'acide malonique, l'acide oxalique, l'acide succinique, l'acide glutarique, l'acide 2-méthylglutarique, l'acide 3-méthylglutarique, l'acide adipique, l'acide pimélique, l'acide subérique, l'acide azélaïque, l'acide sébacique, l'acide undécanedioïque, l'acide dodécanedioïque, l'acide brassylique, l'acide tétradécanedioïque, l'acide 3,3-diméthylpentanedioïque, l'acide fumarique, l'acide 2,2-diméthylglutarique, l'acide subérique, l'acide gras dimère, l'acide 1,3-cyclopàentanedicarboxylique, l'acide 1,4-cyclohexanedicarboxylique, l'acide 1,3-cyclohexanedicarboxylique, l'acide diglycolique, l'acide itaconique, l'acide maléique, l'anhydride maléique, l'acide 2,5-narbornanedicarboxylique, et les esters, anhydrides ou mélanges de ceux-ci, et/ou
- le ou les alcanols en C₂-C₁₂ sont choisis dans le groupe consistant en l'éthylèneglycol, le 1,2-propanediol, le 1,3-propanediol, le 1,2-butanediol, le 1,4-butanediol, le 1,5-pentanediol, le 1,6-hexanediol, le 2,4-diméthyl-2-éthylhexane-1,3-diol, le 2,2-diméthyl-1,3-propanediol, le 2-éthyl-2-butyl-1,3-propanediol, le 2-éthyl-2-isobutyl-1,3-propanediol, le 2,2,4-triméthyl-1,6-hexanediol, le cyclopentanediol, le 1,4-cyclohexanediol, le 1,2-cyclohexanediméthanol, le 1,3-cyclohexanediméthanol, le 1,4-cyclohexanediméthanol ou le 2,2,4,4-tétraméthyl-1,3-cyclobutanediol, ou les mélanges de ceux-ci.

3. Procédé selon l'une des revendications précédentes, **caractérisé en ce qu'**on ajoute dans l'étape a) des comonomères supplémentaires, qui de préférence sont choisis dans le groupe consistant en l'acide lactique, les oligomères de l'acide lactique, l'acide hydroxybutyrique, les oligomères de l'acide hydroxybutyrique, le polyéthylèneglycol, le polypropylèneglycol, le glycérol, le triméthylolpropane, le pentaérythritol ou l'acide citrique, ou les mélanges de ceux-ci.

4. Procédé selon l'une des revendications précédentes, **caractérisé en ce que**, dans l'étape a), le rapport stoechiométrique entre la quantité totale des fonctionnalités carboxyle et la quantité totale des fonctionnalités hydroxyle est compris dans la plage de 1:0,5 à 1:5,0, de préférence de 1:0,9 à 1:3,0, d'une manière particulièrement préférée de 1:1,1 à 1:2,0.

5. Procédé selon l'une des revendications précédentes, **caractérisé en ce que** dans l'étape a), la pâte est, grâce à des mesures techniques telles que des organes agitateurs, des buses mélangeuses, des conduites de circulation, etc., maintenue dans un état fluide, ainsi que pouvant être refoulée par des pompes, et une séparation par sédimentation de composants individuels de la pâte est empêchée.

6. Procédé selon l'une des revendications précédentes, **caractérisé en ce que** le catalyseur présente une pureté > 99,9 % en poids de titane ou de zirconium, le catalyseur étant utilisé de préférence à une concentration de 1 à 20 000 ppm, de préférence de 10 à 10 000 ppm, par rapport au poids total des monomères et oligomères utilisés.

7. Procédé selon l'une des revendications précédentes, **caractérisé en ce que** l'estérification ou la transestérification est mise en oeuvre dans l'étape b) à une température de 150 à 250°C et sous une pression de 0,7 à 4 bar, auquel cas de préférence, dans l'étape b) et/ou après l'étape b), on élimine au moins partiellement, ou en totalité, les sous-produits ou produits de condensation qui se présentent dans les conditions normales sous forme vapeur à partir de 60°C, en particulier l'eau ou le méthanol.

8. Procédé selon l'une des revendications précédentes, **caractérisé en ce que**, dans l'étape c), la poly- ou la copolycondensation est mise en oeuvre en deux étapes, auquel cas, dans une première étape partielle c1), on prépare à partir du produit de réaction obtenu dans l'étape b), par polycondensation ou copolycondensation, un prépolymère de polyester ou un prépolymère de copolyester, et, dans une étape partielle c2) subséquente, on prépare à partir du prépolymère de polyester ou du prépolymère de copolyester de l'étape partielle c1), par polycondensation ou copolycondensation, un polyester ou un copolyester ayant une viscosité relative de 1,5 à 2,0, les étapes partielles étant mises en oeuvre dans un ou plusieurs réacteurs, ce à l'occasion de quoi on met en oeuvre de préférence l'étape c1) sous une pression de 0,1 bar à 2 bar, d'une manière particulièrement préférée de 0,15 bar à 1,0 bar, en particulier de 0,2 bar à 0,7 bar, et à des températures de 160 à 300°C, de préférence de 200 à 260°C, et/ou on met en oeuvre de préférence l'étape c2) sous une pression diminuée par rapport aux conditions normales, de préférence sous une pression de 0,1 mbar à 30 mbar, d'une manière particulièrement préférée de 0,2 mbar à 10 mbar, en particulier de 0,4 mbar à 5 mbar, et à des températures de 200 à 300°C, de préférence de 220 à 270°C.

9. Procédé selon l'une des revendications précédentes, **caractérisé en ce que**, avant et/ou pendant l'étape c) ou avant l'étape c1) ou pendant l'étape c1) ou c2), on ajoute au moins l'un des composants suivants, de préférence à une concentration de 0,01 à 1,0 % en poids par rapport à la masse du polyester ou du copolyester :
- au moins un cocatalyseur, en particulier choisi dans le groupe des sels d'étain, d'antimoine ou de cobalt, et/ou au moins un stabilisant, en particulier du groupe des sels de phosphore ou des acides phosphoriques inorganiques, des composants organiques du phosphore ou des stabilisants du groupe des types Irganox®.
- des lubrifiants, tels que par exemple des stéarates métalliques,
- des agents de démoulage, tels que par exemple des alcoolates d'acides gras ou des cires de paraffine,
- des composés du silicium,
- des agents de nucléation,
- des matières de charge telles que par exemple le dioxyde de titane, le talc, le plâtre, la chaux, la craie, les silicates, les alumines, le noir de carbone, la lignine, la cellulose, l'amidon, les nanoparticules et
- des pigments organiques ou inorganiques pour coloration dans la masse ou correction de la couleur,
- des mélanges de ceux-ci.

10. Procédé selon au moins l'une des revendications précédentes, **caractérisé en ce que** :
a) le produit de réaction obtenu dans l'étape b) est ajusté à une viscosité relative R.V. de 1,02 à 1,1, de préférence de 1,03 à 1,08, d'une manière particulièrement préférée de 1,04 à 1,06, et/ou
b) le polyester obtenu dans l'étape c), en particulier dans l'étape c2), est ajusté à une viscosité relative de 1,5 à 2,50, de préférence de 1,55 à 2,0, d'une manière particulièrement préférée de 1,60 à 1,90.

11. Procédé selon l'une des revendications précédentes, **caractérisé en ce que** le produit de la réaction est, avant, pendant ou après l'étape c), soumis à une étape d'extension de chaîne par addition d'un composé réactif choisi dans le groupe des époxydes, carbodiimides ou diisocyanates difonctionnels ou à fonctionnalité plus élevée, des oxazolines ou des dianhydrides, en particulier en une quantité de 0,01 à 4 % en poids par rapport à la masse du polyester ou du copolyester.

12. Procédé selon au moins l'une des revendications précédentes, **caractérisé en ce que** le produit de la réaction obtenu avant, pendant ou après l'étape c) est, après refroidissement et conversion en une forme de granulé et/ou de poudre, et après cristallisation, soumis à au moins l'une des étapes suivantes :
- post-condensation dans la phase solide pour augmenter la masse moléculaire à une température de 100 à 230°C, mais dont plus 10 K inférieure à la température de fusion du polyester ou du copolyester, par passage d'un gaz inerte ou d'un mélange de gaz inertes du groupe de l'azote, du dioxyde de carbone, de l'argon, ou par abaissement à une pression, réduite par rapport à la pression atmosphérique, correspondant à un niveau de pression de 0,01 à 0,2 bar,
- élimination d'un ou plusieurs produits de réaction ou sous-produits volatils du groupe de l'acétaldéhyde, du méthyldioxolane, de l'acroléine, de l'eau ou du tétrahydrofurane, par passage d'un courant gazeux ou d'un mélange de gaz du groupe de l'air, de l'azote, de l'argon ou du dioxyde de carbone, ayant un point de rosée de l'eau de -100°C à 10°C et de préférence de -70°C à -20°C à une température de 80 à 200°C et de préférence de 100 à 150°C.

13. Utilisation du polyester ou du copolyester préparé selon l'une des revendications 1 à 12 pour fabriquer des objets moulés compostables, des mousses biodégradables et des agents de couchage du papier.
